(19) Europäisches Patentamt / European Patent Office / Office européen des brevets

(11) **EP 1 986 344 A1**

(12) **EUROPEAN PATENT APPLICATION**
published in accordance with Art. 158(3) EPC

(43) Date of publication:
**29.10.2008 Bulletin 2008/44**

(51) Int Cl.:
*H04B 7/08* (2006.01)   *H01Q 21/00* (2006.01)
*H04B 1/18* (2006.01)

(21) Application number: **06713694.5**

(22) Date of filing: **14.02.2006**

(86) International application number:
**PCT/JP2006/302553**

(87) International publication number:
**WO 2007/094050 (23.08.2007 Gazette 2007/34)**

(84) Designated Contracting States:
**DE FR GB**

(71) Applicant: **MATSUSHITA ELECTRIC INDUSTRIAL CO., LTD.**
**Osaka 571-8501 (JP)**

(72) Inventors:
• **TAKAGI, Kenji**
**Matsushita Electric Industrial Co., Ltd.**
**Osaka 540-6207 (JP)**
• **HAYASHI, Toshiteru**
**Matsushita Electric Industrial Co., Ltd.**
**Osaka 540-6207 (JP)**

• **TAKAHASHI, Tsukasa**
**Matsushita Electric Industrial Co., Ltd.**
**Osaka 540-6207 (JP)**
• **SAITO, Yutaka**
**Matsushita Electric Industrial Co., Ltd.**
**Osaka 540-6207 (JP)**

(74) Representative: **Grünecker, Kinkeldey, Stockmair & Schwanhäusser**
**Anwaltssozietät**
**Leopoldstrasse 4**
**80802 München (DE)**

(54) **MOBILE RADIO APPARATUS**

(57)   It is an object to relieve deterioration in efficiency due to the influence electromagnetic coupling between antennas and to obtain a high diversity gain, and a high transmission speed and a large communication capacity in an MIMO system. In a portable wireless machine including two types of antennas 11 A and 11 B for receiving a digital modulating signal, matching circuits 12A and 12B set individually to the antennas 11A and 11 B respectively, tuners 13A and 13B, demodulating portions 14A and 14B, a combining portion 15 for combining a demodulated signal, and receiving quality deciding portions 17A, 17B and 17C for outputting receiving qualities in respective branches and after a combination, a diversity effect decision is made by using the receiving quality after the combination and a receiving quality in a single branch receipt, and a matching condition of the matching circuit 12A or the matching circuit 12B of the antenna 11 A or the antenna 11B is controlled corresponding to a result.

*FIG. 1*

**Description**

<TECHNICAL FIELD>

The present invention relates to a portable wireless apparatus loading a diversity receiver, and a portable wireless apparatus loading a receiver of a multi input multi output system (Multiple Input Multiple Output system or an MIMO system).

<BACKGROUND ART>

A diversity antenna to be loaded onto a portable wireless apparatus, for example, a portable telephone generally has a structure in which two antennas are loaded into a housing of the portable telephone. Examples of a main diversity method include a selecting diversity system for selecting either of signals received by the respective antennas which has a higher receiving quality and a combined diversity system for simultaneously receiving and combining signals in two branches described in Patent Document 1, for example. In order to constitute a diversity antenna, generally, the antennas are disposed at a distance of approximately $\lambda/2$ ($\lambda$ ; wavelength). In the case of a portable telephone, however, a housing has a small size. For this reason, it is physically hard to maintain the distance between the antennas. If the distance between the antennas is short, thus, there is a problem in that the antennas are electromagnetically coupled to each other, resulting in deterioration in an antenna performance.

In this case, there has been known unit capable of suppressing a deterioration in coupling by grounding a signal wire for power supply of the unselected antenna in the selecting diversity system as described in Patent Document 2, for example. As described in Patent Document 3, moreover, there has been known a method capable of suppressing an influence on a transmit/receive shared antenna by a receive only antenna in a transmitting operation through a phase circuit provided on the receive only antenna in the combined diversity system in which one antenna is constituted by a plurality of antennas used as the transmit/receive shared antennas.

In recent years, furthermore, an MIMO system has been known as one of a technique for increasing a communication speed more greatly and a technique for increasing a transmission capacity more greatly. In the MIMO system, a plurality of antennas is provided on both a transmitting side and a receiving side, thereby constituting a multiple input multiple output system through a wireless propagation path. By increasing the number of antennas to be used for transmission and receipt, consequently, it is possible to enhance a space utilization efficiency, thereby improving a communication speed and a transmission capacity. In the case in which the antenna of the MIMO system is used, generally, the degree of improvement in the communication speed and the transmission capacity is increased by the use of the plurality of antennas. On the other hand, in the same manner as in the case in which the diversity antenna is used, it is physically hard to maintain a distance between the antennas because a housing has a small size in the case of a portable telephone. In the case in which the distance between the antennas is short, thus, there is a problem in that the antennas are electromagnetically coupled to each other, resulting in deterioration in an antenna performance.

Patent Document 1 : JP-A-2004-320528
Patent Document 2 : JP-A-9-289483
Patent Document 3 : JP-A-2005-151194

<DISCLOSURE OF THE INVENTION>

<PROBLEMS THAT THE INVENITON IS TO SOLVE>

In the case of the combined diversity system requiring to operate two antennas at the same time which has been described in the Patent Document 1, however, both of the antennas are always terminated with a wireless circuit impedance. Consequently, there is a problem in that it is impossible to apply a countermeasure against a deterioration in coupling in which a signal wire for power supply of one of the antennas is grounded in the deterioration in coupling and efficiencies of both of the antennas are thus reduced.

In a countermeasure against the deterioration in coupling using a phase circuit that has been described in the Patent Document 3, moreover, there is a problem in that it is impossible to improve deterioration in an antenna efficiency that is caused by antenna coupling in a receiving operation.

In the case of an MIMO system required to operate a plurality of antennas at the same time, furthermore, the antennas are always terminated with a wireless circuit impedance in the same manner as in the combined diversity system. Consequently, there is a problem in that it is impossible to apply a countermeasure against deterioration in coupling in which a signal wire for power supply of one of the antennas is grounded in the deterioration in coupling and efficiencies of the mutual antennas are thus reduced.

**EP 1 986 344 A1**

In consideration of the circumstances, it is an object of the invention to provide a portable wireless apparatus that can relieve deterioration in efficiency due to coupling between antennas and can obtain a high diversity gain, and a high transmission speed and a large communication capacity in an MIMO system.

<MEANS FOR SOLVING THE PROBLEMS>

A portable wireless apparatus according to the invention comprises a plurality of antenna elements, a combined diversity processing portion for combining a receiving signal which is received by each of the antenna elements, and a matching condition switching unit for applying, to each of the antenna elements, a predetermined different matching condition from an initial matching condition set to each of the antenna elements corresponding to a receiving quality of each of the antennas.

By the structure, it is possible to suppress deterioration in efficiency that is caused by coupling between plural antennas while operating the antennas at the same time.

In the portable wireless apparatus according to the invention, moreover, the matching condition switching unit includes a switching unit for switching a matching condition of each of the antenna elements into the predetermined matching condition, and a control unit for controlling the switching unit corresponding to an operating state of a combining operation of the combined diversity processing portion.

By the structure, it is possible to set the matching condition of the antenna which is suitable for a combined diversity receipt and a single branch receipt corresponding to the operating state of the combined diversity processing portion.

In the portable wireless apparatus according to the invention, furthermore, the control unit controls the switching unit in such a manner as to apply the initial matching condition to each of the antenna elements when the combining operation of the combined diversity processing portion is stopped, and to apply the predetermined different matching condition from the initial matching condition to each of the antenna elements when the combining diversity processing portion carries out the combining operation.

By the structure, it is possible to apply the predetermined matching condition that is different from the predetermined matching condition, thereby suppressing deterioration in an efficiency that is caused by the coupling between the antennas in the combined diversity receipt, and furthermore, to apply matching conditions which are suitable for individual antenna elements in the single branch receipt. Thus, it is possible to maintain a high antenna performance in both the combined diversity receipt and the single branch receipt.

Moreover, a portable wireless apparatus according to the invention comprises a plurality of antenna elements, a signal processing portion for processing a receiving signal received by each of the antenna elements through a multiple input multiple output system (MIMO system), and matching condition switching unit for applying, to each of the antenna elements, a predetermined different matching condition from an initial matching condition set to each of the antenna elements corresponding to a receiving quality of each of the antennas.

By the structure, it is possible to suppress deterioration in an efficiency that is caused by coupling between a plurality of plural antennas while operating the antennas at the same time in the MIMO system.

In the portable wireless apparatus according to the invention, furthermore, the predetermined matching condition switching unit includes a switching unit for switching a matching condition of each of the antenna elements into the predetermined matching condition, and a control unit for controlling the switching unit corresponding to an operating state of a processing operation of the signal processing portion.

By the structure, it is possible to set a suitable matching condition of an antenna corresponding to the operating state off the signal processing portion in the MIMO receipt and the single branch receipt, more specifically, a single input multiple output (Single Input Multiple Output or SIMO) or a single input single output (Single Input Single Output or SISO) receipt.

In the portable wireless apparatus according to the invention, moreover, the control unit controls the switching unit in such a manner as to apply the initial matching condition to each of the antenna elements when a part of the processing operation of the signal processing portion is stopped, and to apply the predetermined different matching condition from the initial matching condition set individually to each of the antenna elements when the signal processing portion carries out the processing operation.

By the structure, it is possible to apply a matching circuit which is different from the predetermined matching condition, thereby suppressing a deterioration in an efficiency which is caused by the coupling between the antennas in the MIMO receipt, and to apply suitable matching conditions for the individual antenna elements in the single branch receipt (SIMO or SISO receipt) or a partial branch receipt (the MIMO receipt in which the number of receiving wires is decreased). Thus, it is possible to maintain a high antenna performance in both the MIMO receipt and the single branch receipt.

3

<ADVANTAGE OF THE INVENTION>

According to the invention, it is possible to provide a portable wireless apparatus capable of relieving a deterioration in an efficiency which is caused by coupling between antennas and obtaining a high diversity gain, and a high transmission speed and a large communication capacity in an MIMO system.

<BRIEF DESCRIPTION OF THE DRAWINGS>

Fig. 1 is a diagram showing a basic structure of a portable wireless machine loaded onto a diversity receiver according to a first embodiment of the invention.
Fig. 2 is a diagram showing a structure of a matching circuit in the portable wireless machine.
Fig. 3 is a diagram showing a structure according to a variant of the matching circuit in the portable wireless machine.
Fig. 4 is a graph showing a frequency versus VSWR characteristic indicating a matching condition to be applied in a single branch receipt of the portable wireless machine.
Fig. 5 is a graph showing a frequency versus VSWR characteristic indicating a matching condition to be applied in a diversity receipt of the portable wireless machine.
Fig. 6 is a block diagram showing a structure of a control portion in the portable wireless machine.
Fig. 7 is a flowchart showing an operation in the single branch receipt of the portable wireless machine.
Fig. 8 is a flowchart showing an operation in the diversity receipt of the portable wireless machine.
Fig. 9 is an explanatory diagram showing an antenna efficiency in switching of a matching circuit in the portable wireless machine.
Fig. 10 is a diagram showing a basic structure of a portable wireless machine loading a diversity receiver according to a second embodiment of the invention.
Fig. 11 is a block diagram showing a structure of a control portion in the portable wireless machine.
Fig. 12 is a diagram showing a basic structure of a portable wireless machine loading a receiver of an MIMO system according to a third embodiment of the invention.

<EXPLANATION OF THE DESIGNATIONS>

10, 20, 30 portable wire machine
11A, 11B, 11C, 11D antenna
12A, 12B, 12C, 12D, 21A, 21B, 21C, 21D matching circuit
121A, 121B PIN diode (high frequency switch)
122A, 122B reactance element
13A, 13B tuner
14A, 14B demodulating portion
15 combining portion (combined diversity processing portion)
16 error correcting portion
17A, 17B, 17C, 17D receiving quality deciding portion
18 control portion (control unit)
181 deciding parameter storing unit
182 receiving mode switching unit
183 diversity effect deciding unit
31 signal processing circuit (MIMO, SIMO and SISO systems)
32 application detecting circuit
SW, SW1, SW2, SW3, SW4 switch (switching unit)

<BEST MODE FOR CARRYING OUT THE INVENTION>

The invention will be described below in detail with reference to the accompanying drawings.

(First Embodiment)

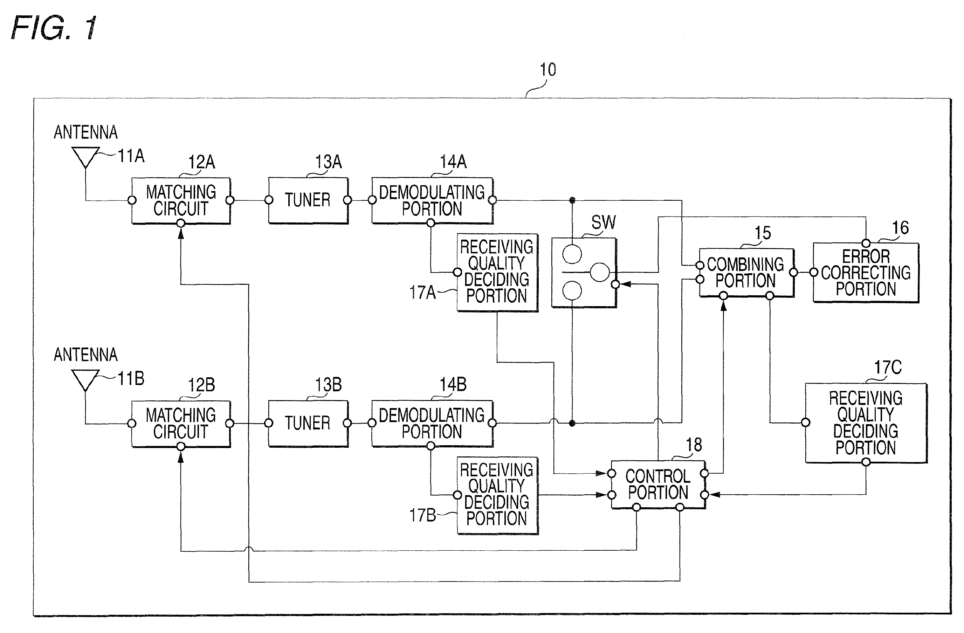

Fig. 1 shows a portable wireless machine to be one of portable wireless apparatuses according to a first embodiment of the invention.

A portable wireless machine 10 according to the embodiment is constituted by a plurality of antennas 11A and 11B for receiving a digital modulating signal, a matching circuit 12A and a matching circuit 12B which are individually set to two types of antennas 11A and 11B respectively, a plurality of tuners 13A and 13B for selecting a desirable channel in response to an input digital signal, a plurality of demodulating portions 14A and 14B for demodulating the selected signal, a combining portion 15 constituting a combined diversity processing portion for combining a received and demodulated signal through each receiving system, an error correcting portion 16 for carrying out an error correction processing, receiving quality deciding portions 17A, 17B and 17C for calculating a numeric value (which will be hereinafter referred to as a "receiving quality value") indicative of a receiving quality at a carrier to noise ratio (which will be hereinafter indicated as "C/N") from a signal demodulated in each branch or a combined signal, a control portion 18 constituting a control unit for controlling a receiving mode based on the receiving quality values obtained in the receiving quality deciding portions 17A, 17B and 17C and switching matching conditions of the matching circuits 12A and 12B, and a switch SW constituting a switching unit for switching a single branch receipt and a combined diversity receipt based on the decision carried out in the control portion 18.

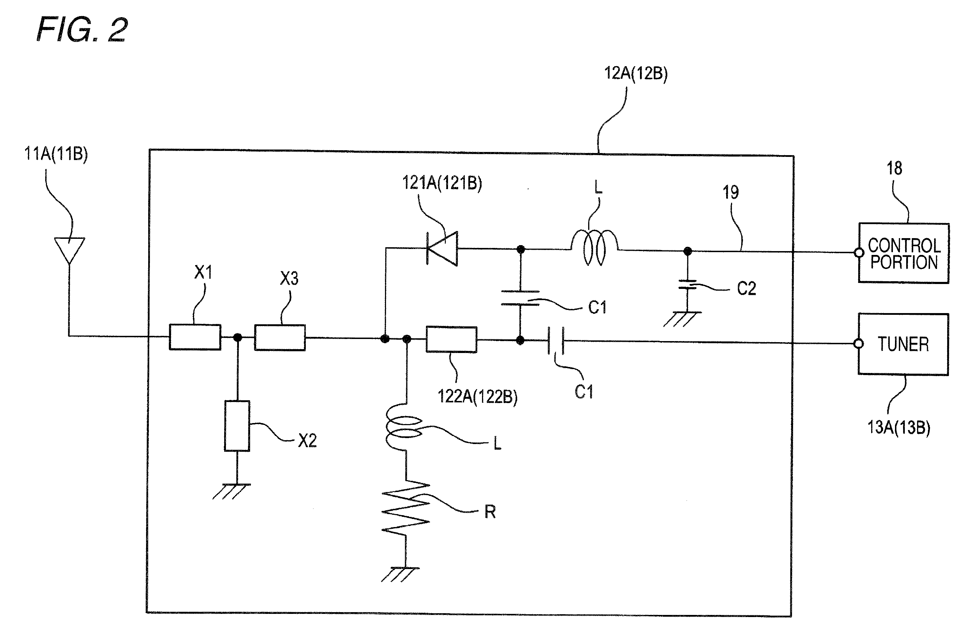

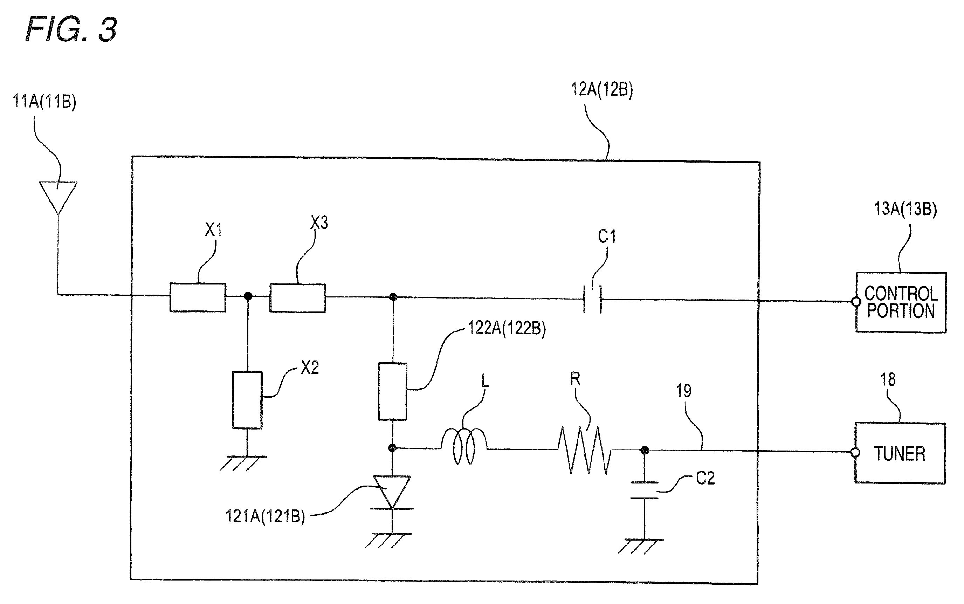

Next, a structure of the matching circuit 12A (the matching circuit 12B is the same and will be therefore written in parentheses) will be described with reference to Figs. 2 and 3. Fig. 2 shows a structure in the case in which a reactance element 122A (122B) is loaded in series, and Fig. 3 shows a structure in the case in which the reactance element 122A (122B) is loaded in parallel. Since the same advantages can be obtained by both of the structures in Figs. 2 and 3, detailed description will be given with reference to Fig. 2.

The matching circuit 12A (12B) shown in Fig. 2 has a circuit structure in which a PIN diode 121A (121 B) to be a high frequency switch and the reactance element 122A (122B) are loaded in series as described above. More specifically, the matching circuit 12A (12B) includes reactance elements X1, X2 and X3 constituted by a coil or a capacitor, a choke coil L having a high impedance to a received digital modulating signal and serving to cut off the digital modulating signal, a capacitor C1 for cutting off a DC signal sent from the control portion 18, a capacitor C2 having a low impedance to the digital modulating signal and grounding a signal wire 19 on a high frequency basis, the reactance element 122A (122B) constituted by a coil or a capacitor, the PIN diode 121A (121 B) for controlling an ON or OFF operation of the reactance element 122A (122B), and a resistor R for regulating a current value flowing to the PIN diode 121A (121 B).

The error correcting portion 16 carries out an error correction processing in which a DSP (Digital Signal Processor) uses Viterbi codes or turbo codes, for example.

In the case in which the signal sent from the control portion 18 is ON, the digital modulating signal flows to the PIN diode 121A (121B) and the matching condition of the antenna 11 A (11 B) is set by the reactance elements X1, X2 and X3. On the other hand, in the case in which the signal sent from the control portion 18 is OFF, the matching condition of the antenna 11A (11 B) is set by the reactance elements X1, X2, X3 and 122A (122B).

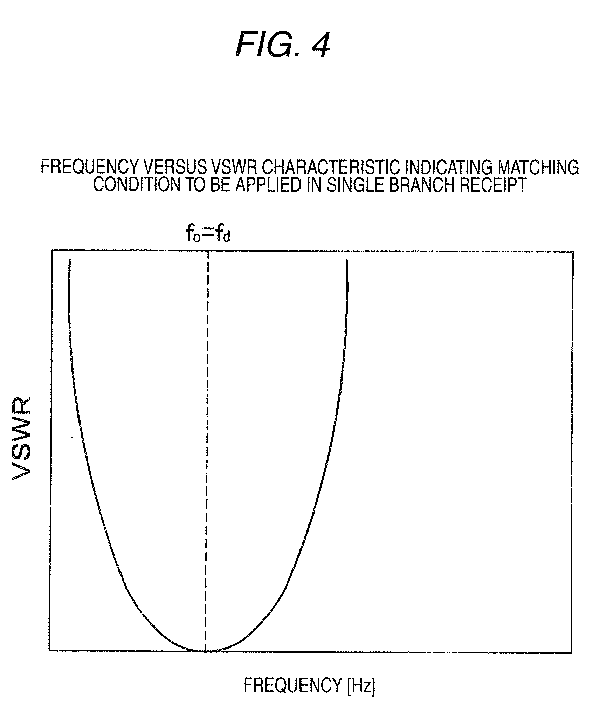

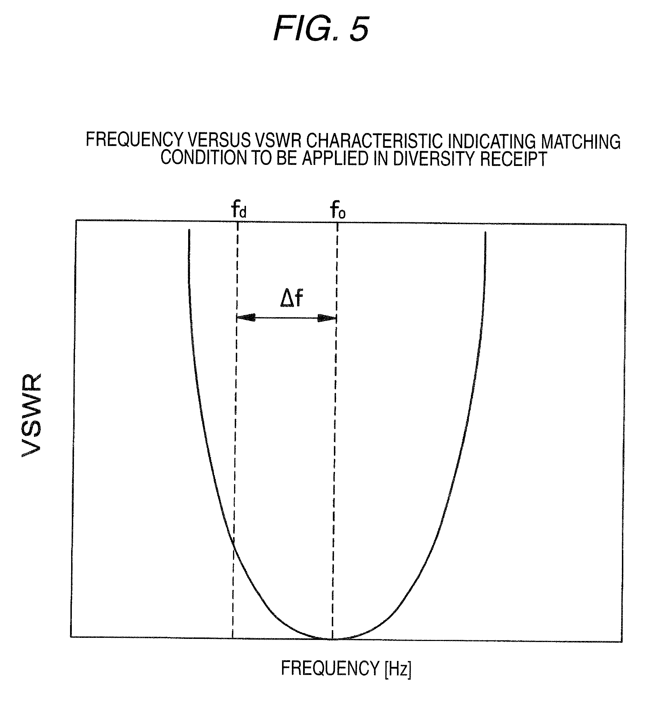

Next, the matching conditions of the matching circuits 12A and 12B will be described with reference to Figs. 4 and 5.

Fig. 4 is a graph for a "frequency" versus "Voltage Standing Wave Ratio" (which will be hereinafter indicated as "VSWR") characteristic (which will be hereinafter referred to as a "frequency versus VSWR characteristic") showing a matching condition capable of maintaining the highest antenna performance. A resonance frequency $f_0$ is set to be almost equal to a desirable channel frequency $f_d$ and a constant of the matching circuit is set in such a manner that a VSWR value at $f_0$ is a minimum. On the other hand, Fig. 5 is a graph for a frequency versus VSWR characteristic showing that a predetermined different matching condition from a matching condition capable of maintaining the highest antenna performance (which will be referred to as an "initial matching condition") is applied. The resonance frequency $f_0$ is set with a shift from the desirable channel frequency $f_d$ by $\Delta f$.

According to the experiment executed by the inventors, it has been confirmed that a whip antenna is used for a receiving antenna and a mismatch loss of approximately 1 dB is generated for the matching condition having the highest antenna performance (the initial matching condition) and a deterioration in coupling of the other antenna is improved in the case in which a frequency of a receiving signal is 470 MHz to 770 MHz and $\Delta f$ is approximately 70 MHz.

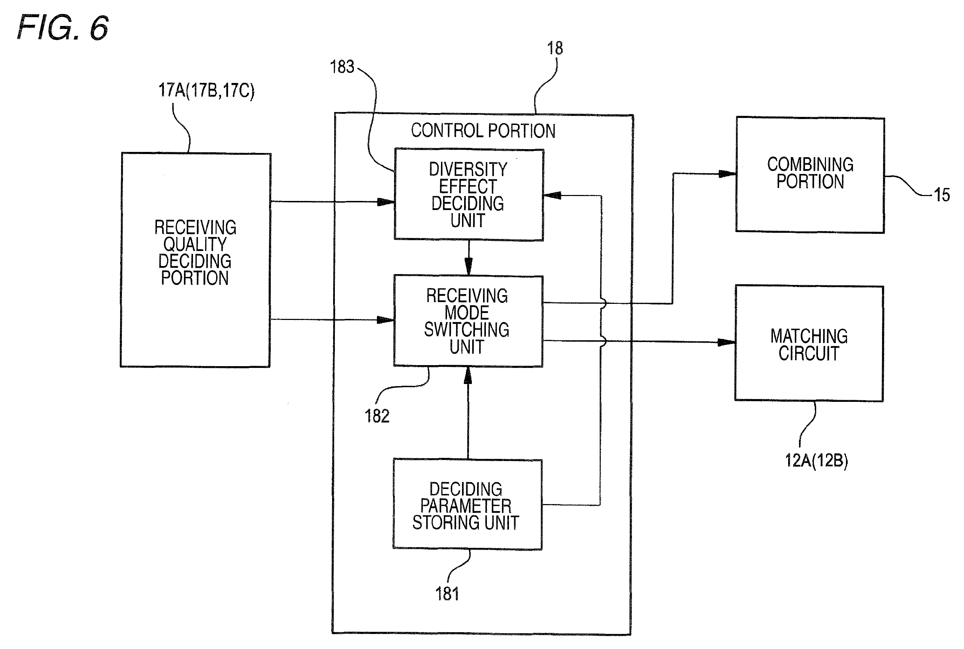

Next, the structure of the control portion 18 will be described in detail with reference to Fig. 6

As shown in Fig. 6, the control portion 18 includes a deciding parameter storing unit 181, a receiving mode switching unit 182, and a diversity effect deciding unit 183.

The deciding parameter storing unit 181 pre-stores a parameter required for a control constituted by an ROM and an RAM.

On the one hand, the diversity effect deciding unit 183 decides whether a diversity effect is produced or not based on the respective receiving quality values calculated from the receiving quality deciding portions 17A, 17B and 17C and an effect deciding threshold recorded in the deciding parameter storing unit 181, and outputs a result of the decision to the receiving mode switching unit 182.

On the other hand, the receiving mode switching unit 182 carries out a switching decision in a receiving mode based on the respective receiving quality values calculated by the receiving quality deciding portions 17A, 17B and 17C, an effect decision result obtained from the diversity effect deciding unit 183, and a receiving state deciding threshold recorded in the deciding parameter storing unit 181, and switches an ON or OFF operation of a power supply of the combining portion 15 or switches the matching condition of the matching circuit 12A (12B) if it is decided that the switching is required.

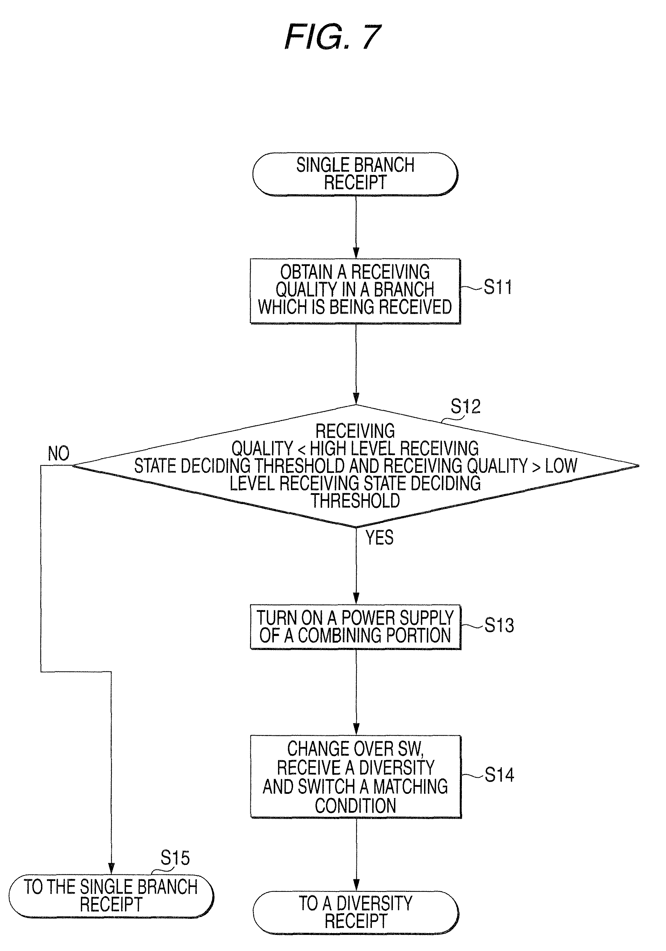

An operation of the portable wireless machine 10 having the structure will be described with reference to Figs. 7 to 9.

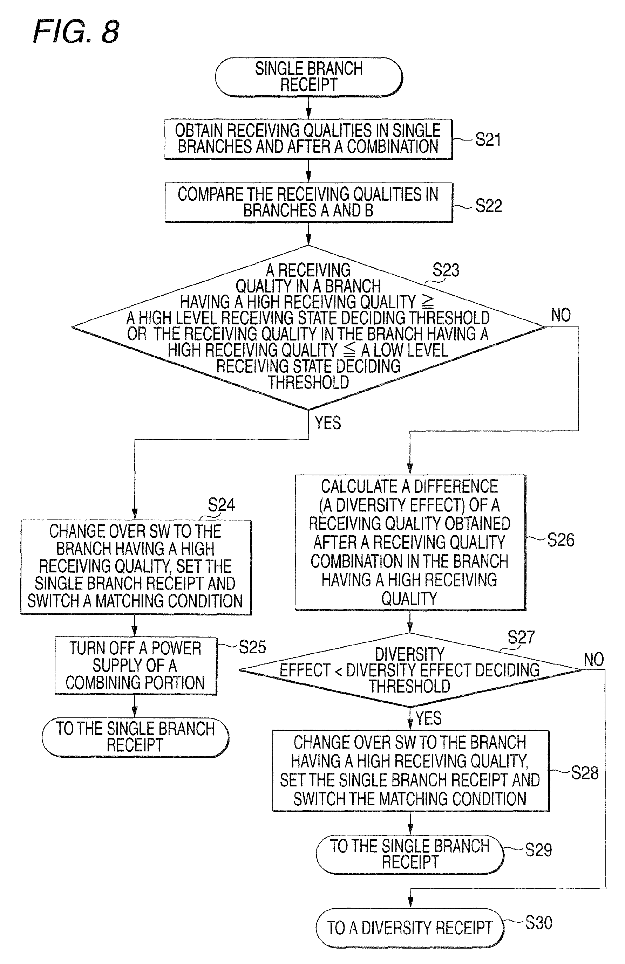

(I) First of all, an operation in a single branch receipt will be described with reference to Fig. 7.
At first, a receiving quality value in a branch that is being received is obtained by the receiving quality deciding portion 17A (or 17B) (Step S11). Next, the receiving quality value thus obtained is compared with the receiving state deciding threshold recorded in the deciding parameter storing unit 181 by the receiving mode switching unit 182 (Step S12). If a current receiving quality value is smaller than a receiving state deciding threshold having a high level and is greater than a receiving state deciding threshold having a low level, it is decided that a diversity receipt is required and the processing proceeds to Step S13. In the other cases, it is decided that the diversity receipt is not required and the processing proceeds to Step S15.
If it is decided that the diversity receipt is required, the power supply of the combining portion 15 is turned ON by the control portion 18 (Step S13). Next, the switch SW is changed over to carry out the diversity receipt, and furthermore, the matching conditions of the matching circuits 12A and 12B are switched into the condition shown in Fig. 5 by turning OFF the PIN diode 121A (or 121 B). A processing in the diversity receipt shown in Fig. 8 is carried out.
On the other hand, if it is decided that the diversity receipt is not required, the operation in the single branch receipt is exactly repeated (Step S15).
(II) Next, an operation in the diversity receipt will be described with reference to Fig. 8.

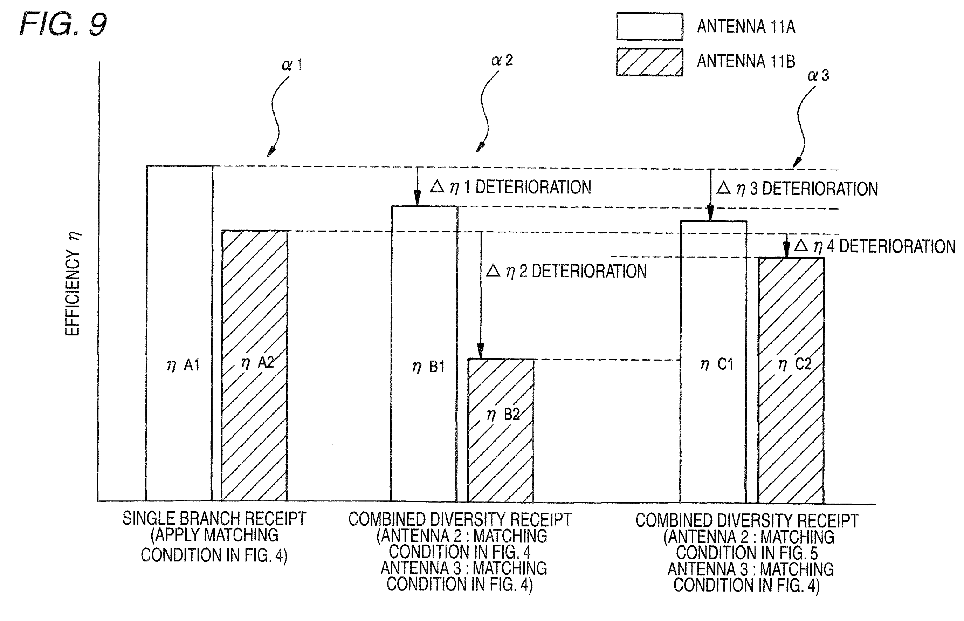

First of all, receiving quality values in the branches A and B and after a combination are obtained in the receiving quality deciding portions 17A, 17B and 17C (Step S21). Subsequently, the receiving qualities in the branch A and the branch B thus obtained are compared with each other and one of the branches having a higher receiving quality is decided by the receiving mode switching unit 182 (Step S22). Then, the receiving quality value in the branch having the higher receiving quality is compared with the receiving state deciding threshold recorded in the deciding parameter storing unit 181 (Step S23).
If the receiving quality value in the branch having the higher receiving quality is equal to or greater than a high level receiving state deciding threshold or is equal to or smaller than a low level receiving state deciding threshold, it is decided that the diversity receipt is not required. In the other cases, it is decided that the diversity receipt is required.
If it is decided that the diversity receipt is not required, the switch SW is changed over into the branch having the high receiving quality, and furthermore, the matching conditions of the matching circuits 12A and 12B are switched into the condition shown in Fig. 4 to set the single branch receipt by turning ON the PIN diodes 121A and 121B (Step S24). Next, the power supply of the combining portion 15 is turned OFF by the control portion 18 and the processing in the single branch receipt shown in Fig. 7 is carried out (Step S25).
On the other hand, if it is decided that the diversity receipt is required, a difference between a receiving quality value in a branch having a high receiving quality and a receiving quality value obtained after a combination (which will be hereinafter referred to as a "diversity effect") is calculated by the diversity effect deciding unit 183 (Step S26). Next, the diversity effect thus obtained is compared with the effect deciding threshold recorded in the deciding parameter storing unit 181 (Step S27).
If the diversity effect is smaller than the effect deciding threshold, it is decided that the diversity receiving effect is not produced and the processing proceeds to Step S28. In other words, if the diversity effect is not produced, the switch SW is changed over into the branch having a high receiving quality, and furthermore, the matching conditions of the matching circuits 12A and 12B are switched into the condition shown in Fig. 4 to set the single branch receipt by turning ON the PIN diodes 121A and 121 B (Step S28). Next, the power supply of the combining portion 15 is turned OFF by the control portion 18 and the processing in the single branch receipt shown in Fig. 7 is carried out (Step S29).
In the other cases, it is decided that the diversity receiving effect is produced and the processing proceeds to Step S30. In other words, if the diversity receiving effect is produced, the processing in the diversity receipt is exactly carried out.
A specific example of the switching of the matching condition will be described with reference to Fig. 9.
In the portable wireless machine 10 loading a combined diversity receiver constituted by the two types of antennas including the antenna 11A and the antenna 11 B, it is assumed that an antenna efficiency $\alpha2$ in the case in which the matching condition of Fig. 4 is applied to the two types of antennas is deteriorated by $\Delta\eta1$ in the antenna 11 A and is deteriorated by $\Delta\eta2$ in the antenna 11 B as compared with an antenna efficiency $\alpha1$ in the case in which one of the antennas is not provided in a state in which a loss is generated by coupling between the antennas. In that case, if an amount of reduction $\Delta\eta2$ of the antenna efficiency is remarkably larger than an amount of reduction $\Delta\eta1$, a level difference between the branches is increased so that the combined diversity effect is reduced.

By turning ON the PIN diode 121A of the matching circuit 12A and turning OFF the PIN diode 121 B of the matching circuit 12B through the control portion 18, therefore, the matching condition of Fig. 5 is applied to the antenna 11 A having a smaller efficiency deterioration caused by the coupling between the antennas and the matching condition of Fig. 4 is applied to the antenna 11 B. An antenna efficiency in the case in which the matching condition is applied is represented by $\alpha3$. In that case, a loss caused by the coupling between the antennas is $\Delta\eta3$ in the antenna 11 A and $\Delta\eta4$ in the antenna 11 B, and a level difference ($|\eta C1 - \eta C2|$) between the branches of the antenna efficiency $\alpha3$ is obtained as follows.

(Equation 1)

$$|\eta C1 - \eta C2| < |\eta B1 - \eta B2|$$

$$|\eta B1 - \eta B2| \text{ ; a difference with the antenna efficiency } \alpha2 \qquad (1)$$

Moreover, the following relationship is established for the loss $\Delta\eta2$ caused by the coupling between the antennas in the antenna 11 B in the case in which the matching condition of Fig. 4 is applied to the two types of antennas and the loss $\Delta\eta4$ caused by the coupling between the antennas in the antenna 11 B in the case in which the matching conditions of Figs. 4 and 5 are applied to the two types of antennas.

$$\Delta\eta4 < \Delta\eta2 \qquad (2)$$

According to the portable wireless machine 10 in accordance with the embodiment, thus, the predetermined different matching condition from the condition for obtaining a high antenna performance (the initial matching condition) in the single branch receipt is applied to either or both of the matching conditions only in combined diversity starting. Therefore, it is possible to relieve deterioration in coupling between the antennas in the combined diversity starting while maintaining the antenna performance in the single branch receipt.

While the description has been given to the case in which the C/N value is used for the threshold in the embodiment, the same advantages can be obtained also in the case in which a parameter representing a receiving quality other than C/N such as a packet error or a bit error is used.

Although the matching condition of Fig. 4 (the initial matching condition) is applied in the single branch receipt, moreover, the matching condition of Fig. 5 may be applied in the case in which the receiving quality is high. While there has been employed the structure in which the matching condition of Fig. 5 is applied to either or both of the antennas in the diversity receipt, moreover, the matching condition of Fig. 4 (the initial matching condition) may be applied in the case in which the receiving quality is high. Although there has been employed the structure in which the switching into a branch having a higher receiving quality is carried out at the Steps S24 and S28 in Fig. 8, furthermore, it is also possible to perform the switching into any of the braches having a higher antenna gain. In addition, when the receiving quality and the diversity effect decision are to be calculated, it is also possible to use a mean value for a certain time in place of an instantaneous value.

In the case in which a reduction in a gain in the single branch receipt can be permitted to some degree, moreover, it is possible to obtain a high gain in the diversity receipt by shifting the resonance frequency $f_0$ from the receiving channel frequency $f_d$ as shown in Fig. 5 even if the matching condition is not switched.

While the PIN diodes 121A and 121 B are used for switching the matching conditions of the matching circuits 12A and 12B, moreover, it is also possible to obtain the same advantages by using another variable reactance element such as a varactor. Although there has been employed the structure in which the matching condition is switched with the ON/OFF operation of the combining portion 15 based on the result of the decision carried out by the receiving mode switching unit 182, moreover, it is also possible to obtain the same advantages by switching only the matching condition without switching the ON/OFF operation of the combining portion 15. Also in the case in which three types of receiving antennas or more are provided, furthermore, the same advantages can be obtained.

While the description has been given to the case in which the number of the reactance elements in each of the matching circuits 12A and 12B is four in the embodiment, moreover, the same advantages can also be obtained by a matching circuit constituted by the other number of reactance elements. Although the coil L and the capacitor C2 are loaded onto the matching circuits 12A and 12B of Fig. 2, furthermore, the same advantages can be obtained also in the case in which the elements are not loaded. If the resistor R can regulate a current flowing to the PIN diodes 121A and 121 B, moreover, the same advantages can be obtained irrespective of a place in which the resistor R is provided.

(Second Embodiment)

Next, description will be given to a portable wireless machine according to a second embodiment of the invention. In the embodiment, the same portions as those in the first embodiment have the same reference numerals and repetitive description will be omitted.

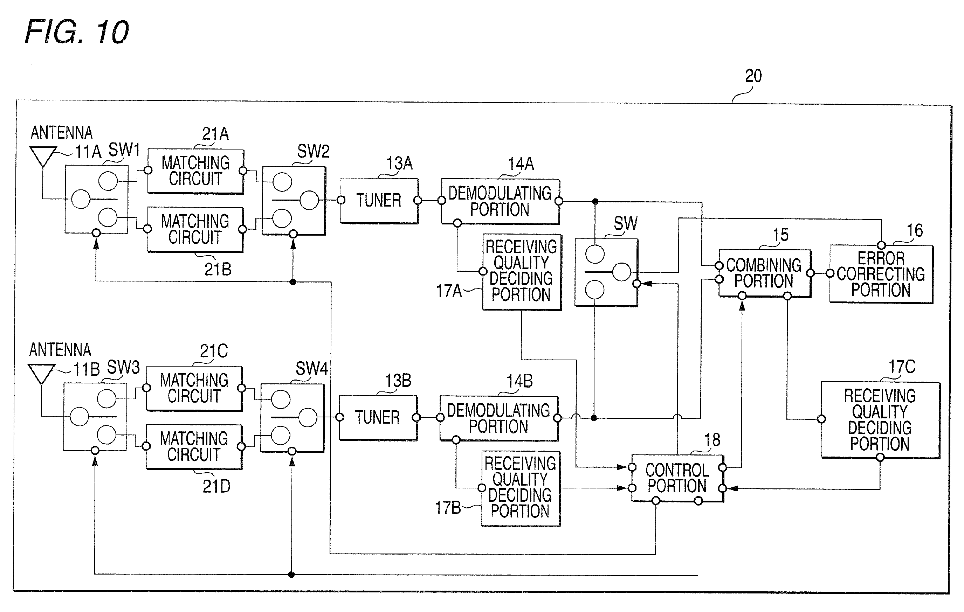

First of all, a basic structure of the portable wireless machine according to the embodiment will be described with reference to Fig. 10.

As shown in Fig. 10, a portable wireless machine 20 comprises two antennas 11 A and 11 B, two tuners 13A and 13B, two demodulating portions 14A and 14B, a combining portion 15, an error correcting portion 16, receiving quality deciding portions 17A, 17B and 17C, a control portion 18 for carrying out a control in a receiving mode, and a switch SW for switching each of a single branch receipt and a combined diversity receipt which are the same as those in the first embodiment, and furthermore, a matching circuit 21A and a matching circuit 21C which serve to apply matching conditions capable of maintaining the highest antenna performances to the antennas 11 A and 11B respectively, a matching circuit 21 B and a matching circuit 21 D which serve to apply predetermined different matching conditions from the matching conditions set to the antennas 11 A and 11 B respectively, and a switch SW1, a switch SW2, a switch SW3 and a switch SW4 which serve to switch the matching circuit 21 A or the matching circuit 21B, and the matching circuit 21C or the matching circuit 21 D depending on a decision made in the control portion 18.

The matching circuit 21A and the matching circuit 21C apply the matching condition shown in Fig. 4. On the other hand, the matching circuit 21 B and the matching circuit 21 D apply the matching condition shown in Fig. 5.

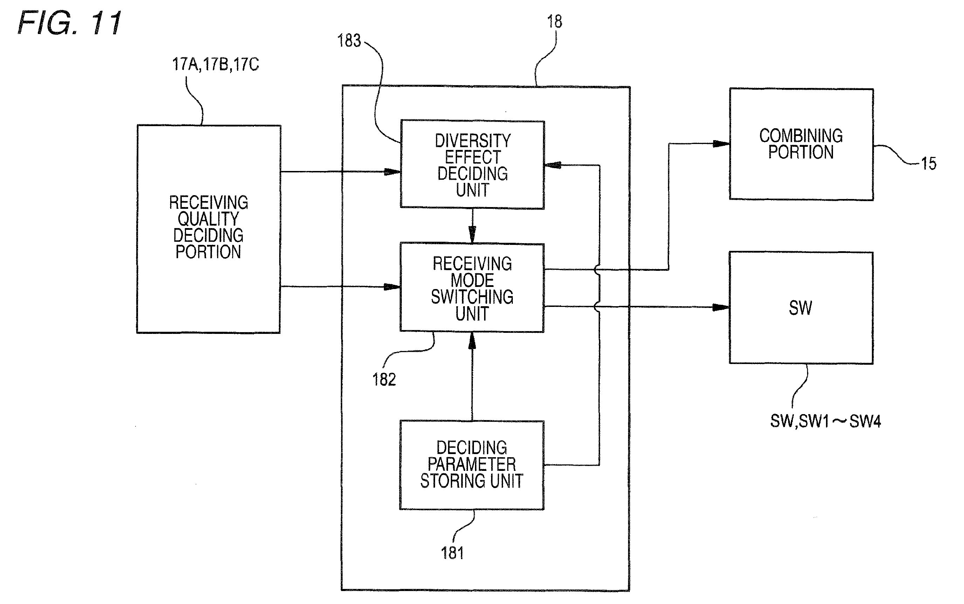

Next, a structure of the control portion 18 will be described in detail with reference to Fig. 11.

The control portion 18 has the same structure as that in the first embodiment as shown in Fig. 11, and comprises a deciding parameter storing unit 181, a receiving mode switching unit 182 and a diversity effect deciding unit 183. Differently from the first embodiment, an output of the receiving mode switching unit 182 is connected to the switches SW1 to SW4 in addition to the switch SW.

An operation of the portable wireless machine 20 having the structure will be described with reference to Figs. 7 to 9.

(I) First of all, an operation in a single branch receipt will be described with reference to Fig. 7.

At first, a receiving quality value in a branch that is being received is obtained by the receiving quality deciding portion 17A (or 17B) (Step S11). Next, the receiving quality value thus obtained is compared with the receiving state deciding threshold recorded in the deciding parameter storing unit 181 by the receiving mode switching unit 182. If a current receiving quality value is smaller than a receiving state deciding threshold having a high level and is greater than a receiving state deciding threshold having a low level, it is decided that a diversity receipt is required and the processing proceeds to Step S13. In the other cases, it is decided that the diversity receipt is not required and the processing proceeds to Step S15 (Step S12).

If it is decided that the diversity receipt is required, a power supply of the combining portion 15 is turned ON by the control portion 18 (Step S13). Next, the switch SW is changed over to carry out the diversity receipt, and furthermore, the switches SW1, SW2, SW3 and SW4 are switched to carry out setting to the matching circuits 21B and 21 D in the matching state shown in Fig. 5 (Step S14). Then, the processing in the diversity receipt shown in Fig. 8 is carried out.

On the other hand, if it is decided that the diversity receipt is not required and the processing proceeds to the Step S15, an operation in a single branch receipt is exactly repeated.

(II) Next, an operation in the diversity receipt will be described with reference to Fig. 8.

First of all, receiving quality values in the branches A and B and after a combination, are obtained by the receiving quality deciding portions 17A, 17B and 17C (Step S21).

Subsequently, the receiving qualities in the branch A and the branch B thus obtained are compared with each other and one of the branches having a higher receiving quality is decided by the receiving mode switching unit 182 (Step S22).

Then, the receiving quality value in the branch having the higher receiving quality is compared with the receiving state deciding threshold recorded in the deciding parameter storing unit 181. If the receiving quality value in the branch having the higher receiving quality is equal to or greater than a high level receiving state deciding threshold or is equal to or smaller than a low level receiving state deciding threshold, it is decided that the diversity receipt is not required and the processing proceeds to Step S24. In the other cases, it is decided that the diversity receipt is required and the processing proceeds to Step S26 (Step S23).

If it is decided that the diversity receipt is not required, the switch SW is changed over into the branch having the high receiving quality at the Step S24, and furthermore, the switches SW1, SW2, SW3 and SW4 are switched to carry out setting to the matching circuits 21A and 21C in the matching state shown in Fig. 4, thereby performing the single branch receipt. Next, the power supply of the combining portion 15 is turned OFF by the control portion 18 (Step S25) and the processing in the single branch receipt shown in Fig. 7 is carried out.

On the other hand, if it is decided that the diversity receipt is required, the "diversity effect (the difference between the receiving quality values after the combination)" is calculated by the diversity effect deciding unit 183 at the Step S26. Next, the diversity effect thus obtained is compared with the effect deciding threshold recorded in the deciding parameter storing unit 181. If the diversity effect is smaller than the effect deciding threshold, it is decided that the diversity receiving effect is not produced and the processing exactly proceeds to Step S28. In the other cases, it is decided that the diversity receiving effect is produced (Step S27).

If the diversity effect is not produced, the switch SW is changed over into the branch having a high receiving quality, and furthermore, the switches SW1, SW2, SW3 and SW4 are changed over to carry out setting to the matching circuits 21A and 21C in the matching state shown in Fig. 4, thereby performing the single branch receipt (Step S28). Next, the power supply of the combining portion 15 is turned OFF by the control portion 18 and the processing in the single branch receipt shown in Fig. 7 is carried out (Step S29).

On the other hand, if the diversity receiving effect is produced, the processing in the diversity receipt is exactly carried out (Step S30).

A specific example of the switching of the matching condition will be described with reference to Fig. 9.

In the portable wireless machine 20 according to the embodiment which loads a combined diversity receiver constituted by the two types of antennas including the antenna 11A and the antenna 11B, it is assumed that an antenna efficiency $\alpha2$ in the case in which the matching condition of Fig. 4 is applied to the two types of antennas is deteriorated by $\Delta\eta1$ in the antenna 11A and is deteriorated by $\Delta\eta2$ in the antenna 11 B as compared with an antenna efficiency $\alpha1$ in the case in which one of the antennas is not provided in a state in which a loss is generated by coupling between the antennas. In that case, if $\Delta\eta2$ is remarkably larger than $\Delta\eta1$, a level difference between the branches is increased so that the combined diversity effect is reduced.

Therefore, the switches SW1 to SW4 are changed over by the control portion 18 to apply the matching condition of Fig. 5 to the antenna 11A having a smaller efficiency deterioration caused by the coupling between the antennas and to apply the matching condition of Fig. 4 to the antenna 11 B. In that case, in the same manner as in the first embodiment, a loss caused by the coupling between the antennas is $\Delta\eta3$ in the antenna 11 A and $\Delta\eta4$ in the antenna 11 B, and the equation (1) is established for a difference in the antenna efficiency $\alpha3$ between the branches.

In the same manner as in the first embodiment, moreover, the equation (2) is established for the loss $\Delta\eta2$ caused by the coupling between the antennas in the antenna 11 B in the case in which the matching condition of Fig. 4 is applied to the two types of antennas and the loss $\Delta\eta4$ caused by the coupling between the antennas in the antenna 11B in the case in which the matching conditions of Figs. 4 and 5 are applied to the two types of antennas respectively.

According to the portable wireless machine 20 in accordance with the embodiment, thus, the different condition from the predetermined condition capable of obtaining a high antenna performance in the single branch receipt is applied to either or both of the matching conditions only in the combined diversity starting. Therefore, it is possible to relieve a deterioration in coupling between the antennas in the combined diversity starting while maintaining the antenna performance in the single branch receipt.

While the description has also been given to the case in which the C/N value is used for the threshold in the embodiment, the same advantages can be obtained also in the case in which a parameter representing a receiving quality other than C/N such as a packet error or a bit error is used.

Although there has also been employed the structure in which the matching condition of Fig. 4 is applied in the single branch receipt in the embodiment, moreover, the matching condition of Fig. 5 may be applied in the case in which the receiving quality is high. While there has been employed the structure in which the matching condition of Fig. 5 is applied to either or both of the antennas in the diversity receipt, moreover, the matching condition of Fig. 4 may be applied in the case in which the receiving quality is high. Although there has also been employed the structure in which the switching into a branch having a higher receiving quality is carried out at the Steps S24 and S28 in Fig. 8 in the embodiment, furthermore, it is also possible to perform the switching into any of the braches having a higher antenna gain.

In addition, when the receiving quality and the diversity effect decision are to be calculated in the embodiment, it is also possible to use a mean value for a certain time in place of an instantaneous value.

Although the matching condition is switched with the ON/OFF operation of the combining portion 15 based on the result of the decision carried out by the receiving mode switching unit 182 in the embodiment, moreover, it is also possible to obtain the same advantages by switching only the matching condition without switching the ON/OFF operation of the combining portion 15.

Also in the case in which three types of receiving antennas or more are provided in the embodiment, furthermore, the same advantages can be obtained.

(Third Embodiment)

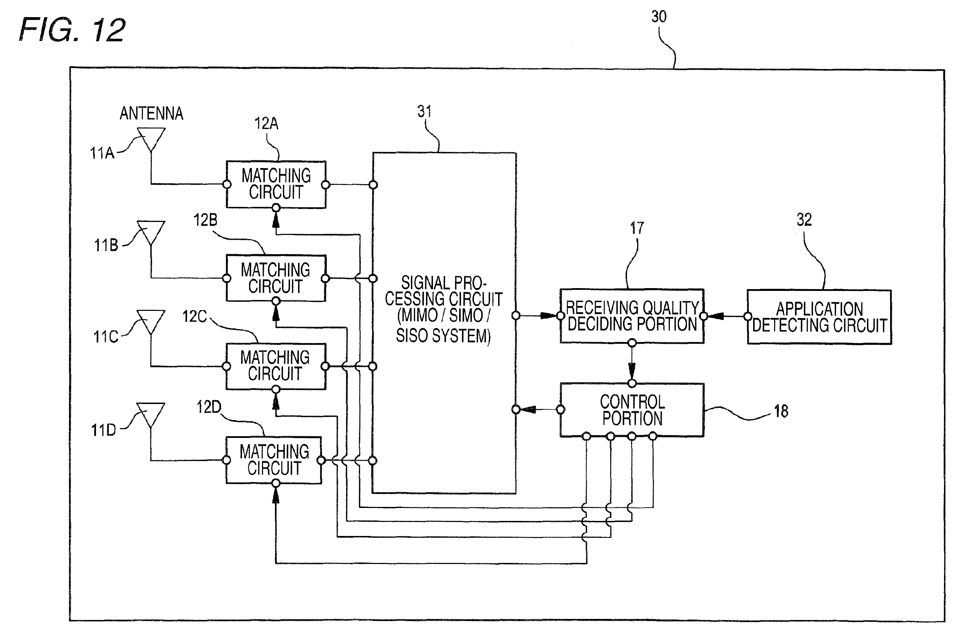

Next, a portable wireless machine according to a third embodiment of the invention will be described with reference to Fig. 12.

First of all, a basic structure of a portable wireless machine 30 according to the embodiment will be described. The invention can apply to a portable wireless machine of an MIMO system having a plurality of antennas and a receiving structure of the MIMO system having four receiving antennas will be described in the embodiment. In the embodiment, moreover, the same portions as those in the first and second embodiments have the same reference numerals and repetitive description will be omitted.

As shown in Fig. 12, the portable telephone 30 according to the embodiment comprises four types of antennas 11A to 11 D, four matching circuits 12A to 12D provided corresponding to the four types of antennas respectively and serving to set matching conditions capable of maintaining the highest antenna performances to the respective antennas, a receiving quality deciding portion 17 for calculating C/N or a communication speed (throughput) representing a receiving quality from a demodulated signal and a control portion 18, and furthermore, a signal processing circuit 31 of an MIMO, SIMO or SISO system and an application detecting circuit 32.

The receiving quality deciding portion 17 decides a proper system from a condition (a communication capacity) required for an application used by a user while monitoring a situation of the C/N or the throughput.

For example, the SISO system is decided in the case in which a communication having a small communication capacity such as a voice is carried out, and the MIMO system is decided in the case in which a communication having a large communication capacity such as a movie is carried out. Also in the same application, moreover, a receiving system having the number of receiving wires decreased, for example, a 2 X 2 MIMO system or a 4 X 4 MIMO system is decided depending on a receiving quality. Furthermore, it is also possible to make a decision of a system that is intended for reducing a signal processing load or a consumed power. In addition, it is also possible to make a decision corresponding to a situation of the receiving quality (a receiving level) of a whole antenna or each antenna. Moreover, it is also possible to detect a moving speed of the portable wireless machine 30 from a receiving signal and to make a decision depending on the speed. A control is carried out by sending a control signal to the signal processing circuit 31 and the matching circuits 12A to 12D corresponding to a receiving system and antenna decided by the receiving quality deciding portion 17.

The signal processing circuit 31 carries out a signal processing of the MIMO, SIMO or SISO system in response to an input digital signal. The application detecting circuit 32 detects an application used by the user.

According to the portable wireless machine 30 in accordance with the embodiment, therefore, the different condition from the predetermined condition capable of obtaining a high antenna performance in the single branch receipt is applied to a part or whole of matching conditions in only the receipt of the MIMO system by using a plurality of antennas in the case of the MIMO system requiring to operate the antennas at the same time in the same manner as in the case of the combined diversity system. Therefore, it is possible to relieve the deterioration in coupling between the antennas in the MIMO receipt while maintaining an antenna function in the single branch receipt.

While the invention has been described in detail with reference to the specific embodiments, it is apparent to the skilled in the art that various changes and modifications can be made without departing from the spirit and scope of the invention.

<INDUSTRIAL APPLICABILITY>

The invention has an advantage that it is possible to relieve a deterioration in coupling between antennas in diversity starting while maintaining an antenna performance in a single branch receipt by applying a predetermined different matching condition from an initial matching condition set to each of antenna elements to either or both of two antennas only in the diversity starting in the case of the two antennas, for example, and is useful as a portable wireless machine for diversity receiving a digital modulating signal. Moreover, a portable wireless machine loading a receiver of an MIMO system also has an advantage that it is possible to relieve a deterioration in coupling between antennas in an MIMO operation while maintaining an antenna performance in a single branch receipt (an SIMO or SISO receipt) or a part of the branch receipt (an MIMO receipt having the number of receiving wires decreased) by applying a predetermined different matching condition from an initial matching condition set to each of antenna elements, and is useful as a portable wireless machine for MIMO receiving a digital modulating signal.

**Claims**

1. A portable wireless apparatus comprising:

   a plurality of antenna elements;
   a combined diversity processing portion, combining a receiving signal which is received by each of the antenna elements; and
   a matching condition switching unit, applying, to each of the antenna elements, a predetermined different matching condition from an initial matching condition set to each of the antenna elements corresponding to a receiving quality of each of the antennas.

2. The portable wireless apparatus according to claim 1, wherein the matching condition switching unit includes:

   a switching unit, switching a matching condition of each of the antenna elements into the predetermined matching condition; and
   a control unit, controlling the switching unit corresponding to an operating state of a combining operation of the combined diversity processing portion.

3. The portable wireless apparatus according to claim 2, wherein the control unit controls the switching unit in such a manner as to apply the initial matching condition to each of the antenna elements when the combining operation of the combined diversity processing portion is stopped, and
   to apply the predetermined different matching condition from the initial matching condition to each of the antenna elements when the combining diversity processing portion carries out the combining operation.

4. A portable wireless apparatus comprising:

   a plurality of antenna elements;
   a signal processing portion of a multiple input multiple output system (MIMO system) which serves to process a receiving signal received by each of the antenna elements through the multiple input multiple output system; and
   a matching condition switching unit, applying, to each of the antenna elements, a predetermined different matching condition from an initial matching condition set to each of the antenna elements corresponding to a receiving quality of each of the antennas.

5. The portable wireless apparatus according to claim 4, wherein the predetermined matching condition switching unit includes:

   a switching unit, switching a matching condition of each of the antenna elements into the predetermined matching condition; and
   a control unit, controlling the switching unit corresponding to an operating state of a processing operation of the signal processing portion.

6. The portable wireless apparatus according to claim 5, wherein the control unit controls the switching unit in such a manner as to apply the initial matching condition to each of the antenna elements when a part of the processing operation of the signal processing portion is stopped, and
   to apply the predetermined different matching condition from the initial matching condition set individually to each of the antenna elements when the signal processing portion carries out the processing operation.


**Amended claims under Art. 19.1 PCT**

1. (Amended) A portable wireless apparatus comprising:

   a plurality of antenna elements;
   a combined diversity processing portion, combining a receiving signal which is received by each of the antenna elements; and
   a matching condition switching unit, applying, to each of the antenna elements, a predetermined different matching condition from an initial matching condition set to each of the antenna elements corresponding to a receiving quality of each of the antennas,

the matching condition switching unit including:

a switching unit, switching a matching condition of each of the antenna elements into the predetermined matching condition; and
a control unit, controlling the switching unit corresponding to an operating state of a combining operation of the combined diversity processing portion.

**2.** Amended ) The portable wireless apparatus according to claim 1, wherein the control unit controls the switching unit in such a manner as to apply the initial matching condition to each of the antenna elements when the combining operation of the combined diversity processing portion is stopped, and
to apply the predetermined different matching condition from the initial matching condition to each of the antenna elements when the combining diversity processing portion carries out the combining operation.

**3.** Amended) A portable wireless apparatus comprising:

a plurality of antenna elements;
a signal processing portion of a multiple input multiple output system (MIMO system) which serves to process a receiving signal received by each of the antenna elements through the multiple input multiple output system; and
a matching condition switching unit, applying, to each of the antenna elements, a predetermined different matching condition from an initial matching condition set to each of the antenna elements corresponding to a receiving quality of each of the antennas,
the predetermined matching condition switching unit including:

a switching unit, switching a matching condition of each of the antenna elements into the predetermined matching condition; and
a control unit, controlling the switching unit corresponding to an operating state of a processing operation of the signal processing portion.

**4.** Amended) The portable wireless apparatus according to claim 3, wherein the control unit controls the switching unit in such a manner as to apply the initial matching condition to each of the antenna elements when a part of the processing operation of the signal processing portion is stopped, and
to apply the predetermined different matching condition from the initial matching condition set individually to each of the antenna elements when the signal processing portion carries out the processing operation.

**5.** (Deleted)

**6.** (Deleted)

## FIG. 1

EP 1 986 344 A1

FIG. 2

11A(11B)

12A(12B)

121A(121B)

L

19

18

CONTROL PORTION

X1    X3

C1

C2

TUNER

X2

122A(122B)

C1

13A(13B)

L

R

EP 1 986 344 A1

FIG. 3

11A(11B)

12A(12B)

13A(13B)

X1    X3                                          C1

CONTROL
PORTION

X2          122A(122B)

EP 1 986 344 A1

L        R        19

18

TUNER

121A(121B)        C2

# FIG. 4

FREQUENCY VERSUS VSWR CHARACTERISTIC INDICATING MATCHING
CONDITION TO BE APPLIED IN SINGLE BRANCH RECEIPT

$f_o=f_d$

VSWR

FREQUENCY [Hz]

# FIG. 5

FREQUENCY VERSUS VSWR CHARACTERISTIC INDICATING MATCHING
CONDITION TO BE APPLIED IN DIVERSITY RECEIPT

## FIG. 6

EP 1 986 344 A1

# FIG. 7

```
        ┌────────────────────┐
        │   SINGLE BRANCH    │
        │      RECEIPT       │
        └────────────────────┘
                  │
                  ▼
        ┌────────────────────┐
        │ OBTAIN A RECEIVING │
        │ QUALITY IN A BRANCH│──S11
        │ WHICH IS BEING     │
        │ RECEIVED           │
        └────────────────────┘
                  │
                  ▼
```

S12

RECEIVING
QUALITY < HIGH LEVEL RECEIVING
STATE DECIDING THRESHOLD AND RECEIVING QUALITY > LOW
LEVEL RECEIVING STATE DECIDING
THRESHOLD

NO                                    YES

```
        ┌────────────────────┐
        │ TURN ON A POWER    │
        │ SUPPLY OF A        │──S13
        │ COMBINING PORTION  │
        └────────────────────┘
                  │
                  ▼
        ┌────────────────────┐
        │ CHANGE OVER SW,    │
        │ RECEIVE A DIVERSITY│──S14
        │ AND SWITCH A       │
        │ MATCHING CONDITION │
        └────────────────────┘
                  │
                  ▼
```

S15

```
  ┌────────────────────┐      ┌────────────────────┐
  │ TO THE SINGLE      │      │   TO A DIVERSITY   │
  │ BRANCH RECEIPT     │      │      RECEIPT       │
  └────────────────────┘      └────────────────────┘
```

## FIG. 8

```
                    ┌─────────────────────┐
                    │   SINGLE BRANCH     │
                    │      RECEIPT        │
                    └─────────────────────┘
                              │
                              ▼
          ┌──────────────────────────────────────┐
          │ OBTAIN RECEIVING QUALITIES IN SINGLE  │  S21
          │ BRANCHES AND AFTER A COMBINATION      │
          └──────────────────────────────────────┘
                              │
                              ▼
          ┌──────────────────────────────────────┐
          │ COMPARE THE RECEIVING QUALITIES IN    │  S22
          │ BRANCHES A AND B                      │
          └──────────────────────────────────────┘
                              │
                              ▼
                       A RECEIVING                    S23
                  QUALITY IN A BRANCH
            HAVING A HIGH RECEIVING QUALITY ≧
          A HIGH LEVEL RECEIVING STATE DECIDING THRESHOLD      NO
          OR THE RECEIVING QUALITY IN THE BRANCH HAVING A  ─────►
            HIGH RECEIVING QUALITY ≦ A LOW LEVEL
                 RECEIVING STATE DECIDING
                        THRESHOLD
                              │ YES
```

CALCULATE A DIFFERENCE (A DIVERSITY EFFECT) OF A RECEIVING QUALITY OBTAINED AFTER A RECEIVING QUALITY COMBINATION IN THE BRANCH HAVING A HIGH RECEIVING QUALITY    S26

CHANGE OVER SW TO THE BRANCH HAVING A HIGH RECEIVING QUALITY, SET THE SINGLE BRANCH RECEIPT AND SWITCH A MATCHING CONDITION    S24

TURN OFF A POWER SUPPLY OF A COMBINING PORTION    S25

TO THE SINGLE BRANCH RECEIPT

DIVERSITY EFFECT < DIVERSITY EFFECT DECIDING THRESHOLD    S27    NO

CHANGE OVER SW TO THE BRANCH HAVING A HIGH RECEIVING QUALITY, SET THE SINGLE BRANCH RECEIPT AND SWITCH THE MATCHING CONDITION    S28

TO THE SINGLE BRANCH RECEIPT    S29

TO A DIVERSITY RECEIPT    S30

# FIG. 9

ANTENNA 11A

ANTENNA 11B

α 1

α 2

α 3

△ η 1 DETERIORATION

△ η 3 DETERIORATION

△ η 4 DETERIORATION

△ η 2 DETERIORATION

EFFICIENCY η

η A1

η A2

η B1

η B2

η C1

η C2

SINGLE BRANCH RECEIPT
(APPLY MATCHING
CONDITION IN FIG. 4)

COMBINED DIVERSITY RECEIPT
(ANTENNA 2 : MATCHING
CONDITION IN FIG. 4
ANTENNA 3 : MATCHING
CONDITION IN FIG. 4)

COMBINED DIVERSITY RECEIPT
(ANTENNA 2 : MATCHING
CONDITION IN FIG. 5
ANTENNA 3 : MATCHING
CONDITION IN FIG. 4)

EP 1 986 344 A1

# FIG. 10

EP 1 986 344 A1

*FIG. 11*

EP 1 986 344 A1

## FIG. 12

ANTENNA

11A — (antenna) — 12A MATCHING CIRCUIT

11B — (antenna) — 12B MATCHING CIRCUIT

11C — (antenna) — 12C MATCHING CIRCUIT

11D — (antenna) — 12D MATCHING CIRCUIT

31 SIGNAL PRO-CESSING CIRCUIT (MIMO / SIMO / SISO SYSTEM)

17 RECEIVING QUALITY DECIDING PORTION

32 APPLICATION DETECTING CIRCUIT

18 CONTROL PORTION

30

EP 1 986 344 A1

## INTERNATIONAL SEARCH REPORT

International application No.

PCT/JP2006/302553

A.   CLASSIFICATION OF SUBJECT MATTER
*H04B7/08*(2006.01), *H01Q21/00*(2006.01), *H04B1/18*(2006.01)

According to International Patent Classification (IPC) or to both national classification and IPC

B.   FIELDS SEARCHED

Minimum documentation searched (classification system followed by classification symbols)
H04B7/08, H01Q21/00, H04B1/18

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP 2003-244043 A   (Nippon Telegraph And Telephone Corp.), 29 August, 2003 (29.08.03), Full text; all drawings (Family: none) | 1-6 |
| Y | JP 2003-046407 A  (Sharp Corp.), 14 February, 2003 (14.02.03), Par. Nos. [0013] to [0025]; Fig. 1 (Family: none) | 1-6 |
| Y | JP 8-321716 A  (Mitsubishi Electric Corp.), 03 December, 1996 (03.12.96), Par. Nos. [0037] to [0041]; Fig. 16 (Family: none) | 1-6 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 May, 2006 (01.05.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/302553

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2003-318702 A  (Matsushita Electric Industrial Co., Ltd.), 07 November, 2003 (07.11.03), Full text; all drawings (Family: none) | 1-6 |
| A | JP 2001-119239 A  (Kenwood Corp.), 27 April, 2001 (27.04.01), Full text; all drawings (Family: none) | 1-6 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004320528 A
- JP 9289483 A
- JP 2005151194 A